# EUROPÄISCHE PATENTSCHRIFT

(11) **EP 2 416 871 B1**
(45) Veröffentlichungstag und Bekanntmachung des Hinweises auf die Patenterteilung: **01.05.2013**
(21) Anmeldenummer: 10724274.5
(22) Anmeldetag: 14.05.2010
(51) Int. Cl.: B01D 53/50, B01D 53/75, B01D 53/78, B01D 53/81, B01D 53/96, C21B 5/06

(54) **VERFAHREN ZUR BEHANDLUNG VON ABGASEN AUS DER STAHLHERSTELLUNG**
METHOD FOR TREATING WASTE GASES RESULTING FROM STEEL PRODUCTION
PROCÉDÉ DE TRAITEMENT DE FUMÉES RÉSULTANT DE LA FABRICATION DE L'ACIER

(30) Priorität: 24.07.2009 DE 102009034712; 06.10.2009 DE 102009048370
(43) Veröffentlichungstag der Anmeldung: 15.02.2012
(73) Patentinhaber: DrySo Tec GmbH, 45356 Essen (DE)
(72) Erfinder: MORUN, Bernd, 45259 Essen (DE); SCHMIDT, Paul-Udo, 45721 Haltern am See (DE)
(74) Vertreter: Von Rohr
(86) Internationale Anmeldenummer: PCT/EP2010/002984
(87) Internationale Veröffentlichungsnummer: WO 2011/009507

(56) Entgegenhaltungen:
- WO-A1-2007/098867
- WO-A1-2008/071215
- CN-A- 101 462 698
- US-A- 3 933 994

## Beschreibung

Die vorliegende Erfindung betrifft das technische Gebiet der Behandlung von Schwefeloxide enthaltenden Abgasen aus technischen Prozessen, insbesondere der Behandlung von aus der Roheisen- bzw. Stahlherstellung mittels Sinterung von Eisenerzen und nachfolgender Roheisenherstellung im Hochofenprozeß stammenden Abgasen oder aber auch von aus anderen technischen Prozessen stammenden, Schwefeloxide enthaltenden Abgasen.

Insbesondere betrifft die vorliegende Erfindung Verfahren zur Behandlung von Schwefeloxide enthaltenden Abgasen aus technischen Prozessen, insbesondere ein Verfahren zur Behandlung von aus der Roheisen- bzw. Stahlherstellung stammenden Abgasen, zu Zwecken der Entfernung und/oder Abscheidung der Schwefeloxide oder zu Zwecken der Reduktion des Schwefeloxidgehalts sowie eine Vorrichtung zur Durchführung dieses Verfahrens.

Im Rahmen der Stahlerzeugung wird das als Ausgangsmaterial benötigte Eisen bzw. Roheisen üblicherweise in enger räumlicher Nachbarschaft zur eigentlichen Stahlherstellung erzeugt. In der Regel ist der meist zur Roheisenherstellung verwendete Hochofen Bestandteil eines Stahlwerks.

Im Hochofen wird das in den Eisenerzen enthaltene Eisenoxid zu elementarem Eisen reduziert. Hierzu wird der Hochofen periodisch und alternierend mit Koks - gegebenenfalls mit weiteren Reduktionsmitteln wie Kohle oder Altkunststoffen - und dem sogenannter Möller, einer Mischung aus Eisenerz und Zuschlägen, wie z. B. Kalk oder Sand, von oben befüllt. Im unteren Teil des Hochofens werden der Koks und die anderen Reduktionsmittel zu Kohlendioxid und Kohlenmonoxid oxidiert, wobei zur Erreichung optimaler Bedingungen 1.200 bis 1.300 °C heiße Luft, der sogenannte Wind, in den Hochofen eingedüst wird. In der Regel wird zusammen mit dem Wind auch noch Öl in den unteren Teil des Hochofens eingedüst, um besonders hohe Temperaturen von über 2.000 °C zu erreichen. Die entstehenden heißen Gase steigen im Hochofen auf. Das Kohlenmonoxid reduziert das Eisenoxid zu elementarem Eisen, wobei es selbst zu Kohlendioxid oxidiert wird, welches durch Reaktion mit nichtumgesetztem Koks wieder zu Kohlenmonoxid reduziert wird. In den tieferen Schichten des Hochofens kommt es auch zu einer Direktreduktion des Eisenoxids durch den Koks bzw. die weiteren Reduktionsmittel, Das flüssig, etwa 1.400 °C heiße Roheisen sammelt sich am Boden des Hochofens und wird durch eine Schicht aus flüssiger Schlacke, welche sich aus den Verunreinigungen des Eisenerzes und den Zuschlagstoffen bildet, vor erneuter Oxidation geschützt. Sowohl Roheisen als auch Schlacke werden in regelmäßigen Abständen abgestochen, d. h. aus dem Hochofen abgelassen,

Die im Hochofenprozeß entstehenden Gase werden Gichtgase genannt und oben aus dem Hochofen abgeleitet. Die Gichtgase besitzen einen Druck von 2 bis 3 bar und bestehen zu jeweils etwa 20 % aus Kohlenmonoxid und Kohlendioxid. Die übrigen Bestandteile der Gichtgase setzen sich in erster Linie aus Stickstoff (ca. 55 %) sowie geringen Anteilen an Wasserstoff, Schwefeloxiden, Stickoxiden und Flugstäuben, insbesondere schwermetallhaltigen Flugstäuben, zusammen.

Aufgrund des hohen Gehalts an oxidierbarem Kohlenmonoxid werden die Gichtgase energetisch genutzt, z. B. in der Stromerzeugung oder der Fernwärme. Problematisch ist jedoch eine Abgasbehandlung der Gichtgase aus Sicht des Umweltschutzes - schon allein aufgrund der anfallenden Mengen: So fallen in einem großen Hochofen, welcher etwa 12.000 t Roheisen pro Tag produziert, etwa 17 Mio, m³ Gichtgase an, welche gereinigt werden müssen.

Die Gesetze über die Emission von Schadstoffen wurden in den letzten Jahren konsequent verschärft, und es ist auch in Zukunft mit noch strengeren Regeln zu rechnen, so daß ein großes Bedürfnis zur effizienten und ökonomisch wie ökologisch sinnvollen Behandlung der Abgase besteht.

Zur Entschwefelung der Gichtgase aus dem Hochofen wird im Stand der Technik eine sogenannte Naßwäsche eingesetzt, d. h. eine Lösung oder Dispersion von Kalkhydrat (Ca(OH)₂) wird in den Abgasstrom eingesprüht, wodurch nicht nur die Schwefeloxide, insbesondere das Schwefeldioxid, chemisch gebunden werden, sondern gleichzeitig auch der überwiegende Anteil der Flugstäube aus den Abgasen entfernt wird. Diese Abgasbehandlung hat jedoch den Nachteil, daß insbesondere bei der Kalkwäsche mit Calciumhydroxidlösung enorme Mengen an mit Schwermetallen verunreinigten schwerlöslichen Rückständen entstehen. Es ist nicht ohne weiteres möglich, die Rückstände wieder von den Schwermetallen zu trennen, so daß der gesamte Rückstand als Sondermüll entsorgt werden muß, wodurch enorme Kosten verursacht werden. Weiterhin fallen große Mengen an Abwasser an, welche ebenfalls aufwendig aufgereinigt werden müssen.

Das im Hochofen verwendete Eisenerz kann bei ausreichender Korngröße unbehandelt verwendet werden, Eisenerze mit besonders feinen Korngrößen müssen jedoch pelletiert oder gesintert werden, ehe sie in den Hochofen gelangen, da bei einer zu feinen Korngröße der Gasstrom im Hochofen stark behindert und der Hochofenprozeß somit nicht unter optimalen Bedingungen ablaufen würde. Beim Pelletieren wird feinkörniges Eisenerz zusammen mit Wasser, Bindemitteln, wie z. B. Bentonit, und anderen Zuschlagsstoffen, wie Kalkstein, Dolomit oder auch Olivin, zu Pellets geformt, welche anschließend in einem Brennvorgang gehärtet werden. Zwischen den einzelnen Pellets befinden sich Hohlräume, welche groß genug sind, um einen ungehinderten Durchtritt der Reduktionsgase zu gewährleisten. Beim Sintern wird eine Mischung aus Feinerzen, Zuschlagsstoffen, Kohlenstoff, wie z. B. Koksgruß, und Kalksandstein mit Wasser vermischt und auf ein sogenanntes Sinterband aufgetragen. Das Sinterband besteht in der Regel aus einem Rostband. Der in der Sintermischung enthaltende Brennstoff wird durch eine Erdgas- oder Gichtgasflamme gezündet und die Brennfront durch ein Saugzuggebläse durch die gesamte Mischung gezogen. Hierdurch brennt die Mischung während der Passage über das Sinterband vollständig durch, und es entsteht ein fester Sinterkuchen, welcher auf die passende Größe gebrochen und dem Hochofenprozeß zugeführt wird. Durch die Sinterung kommt es gleichfalls zu einer Vorreduktion des Eisenerzes.

Auch bei der Sinterung fallen somit Abgase (z. B. schwefeloxidhaltige Abgase) an, welche umweltschädlich sind und einer Nachbehandlung bedürfen. Die zulässigen Höchstwerte der Schadstoffemission von Sinteranlagen in der Stahlherstellung sind bislang gesetzlich noch nicht vollständig geregelt, so daß es zur Zeit noch keine Vorschriften über die Entschwefelung der Abgase von Sinteranlagen gibt. Zwar werden in kleinerem Umfang Naßwäschen, wie z. B. die Kalkwäsche, in der Abgasbehandlung von Sinteranlagen durchgeführt, diese dienen jedoch nicht zur Entfernung der schwefelhaltigen Bestandteile aus den Abgasen, sondern sind von ihrer Art und ihrem Umfang so ausgelegt, daß sie lediglich die Filter zur Entfernung der Flugstäube vor korrosiven sauren Gasen, wie z. B. Hydrogenchlorid (HCl) und Hydrogenfluorid (HF), schützen sollen. Eine Naßwäsche in größerem Umfang zur Entfernung der schwefelhaltigen insbesondere der schwefeloxidhaltigen Bestandteile der Abgase würde wiederum zu großen Mengen schwermetallbelasteter Rückstände führen, welche kostenintensiv entsorgt werden müßten. Gleichfalls würde wiederum eine große Menge an Abwasser entstehen, welches aufwendig und kostenintensiv gereinigt werden müßte. Die in anderen Bereichen, wie z. B. in der Abgasbehandlung von Kohlekraftwerken, erfolgreich eingesetzte Trockensorption mit z. B. Natriumhydrogencarbonat (NaHCO₃) läßt sich im Bereich der Sinteranlagen bislang nicht ökonomisch sinnvoll anwenden, da aufgrund der ungünstigen Kombination von Temperatur und Volumenstrom der Abgase der Umsatz des eingesetzten Sorptionsmittels nicht optimal ist, so daß ein großer Überschuß des betreffenden Sorptionsmittels verwendet werden müßte. Hierdurch wird das Verfahren der Trockensorption allerdings unrentabel, so daß bislang noch kein praktikables, insbesondere in ökologischer wie ökonomischer Hinsicht sinnvoll durchführbares Verfahren im Stand der Technik bekannt ist.

Es ist daher einerseits aus Gründen des Umweltschutzes wünschenswert, ein effektives Verfahren zur Entschwefelung der Abgase aus Sinteranlagen in der Stahlherstellung zur Verfügung zu haben. Andererseits ist im Lichte der Verschärfung der Emissionsschutzgesetze und der Umweltschutzgesetze in den letzten Jahren davon auszugehen, daß der Gesetzgeber in naher Zukunft eine umfassende Regelung bezüglich der Höchstwerte von Schadstoffen in den Abgasen von Sinteranlagen erläßt, so daß auch aus diesem Grund ein effektives Verfahren zur Entschwefelung der Abgase aus Sinteranlagen in der Stahlherstellung erstrebenswert ist.

Die Druckschrift WO 2008/071215 A1 betrifft ein Verfahren zum Reinigen von Abgasen eines Sinterprozesses von Erzen in der Metallerzeugung, bei welchem Erzmaterial mit einem festen Brennstoff unter Verbrennen des Feststoffes und Durchlaufen eines Schwefelprozesses gesintert wird, wobei zumindest die Schadstoffe SOₓ und/oder HCl sowie NOₓ vermindert oder weitgehend beseitigt werden. Hierzu wird das Sinterabgas in einen Wanderbettreaktor von unten durch eine untere und obere Schicht von bereits mit NOₓ sowie SOₓ und/oder HCl beladenen Adsorptions- und/oder Absorptionsmittel geführt, wobei zumindest die Hauptmenge an SOₓ- und/oder HCl-Bestandteilen aus dem Sinterabgas im Porensystem des mit NOₓ beladenen Adsorptions- und/oder Absorptionsmittel adsorbiert. Das derart von der Hauptmenge an SOₓ- und/oder HCl-Bestandteilen gereinigte Sinterabgas wird anschließend innig mit einer ammoniumhaltigen Verbindung gemischt und in die obere Schicht des bereits mit NOₓ und geringen Mengen an SOₓ und/oder HCl beladenen Adsorptions- und/oder Absorptionsmittels geleitet, wobei zumindest die Hauptmenge an NOₓ-Bestandteilen aus dem Sinterabgas entfernt wird.

Weiterhin betrifft die Druckschrift US 3 933 994 A ein Verfahren zur Entschwefelung von Gasen, wobei ein SO₂ enthaltender Gasstrom mit einer Zitronensäure oder Citrat aufweisenden Lösung in Kontakt gebracht wird und ein Gasstrom, welcher H₂S enthält, mit dieser Lösung in Kontakt gebracht wird, wobei elementarer Schwefel ausfällt und aus dem Prozess entfernt wird.

Darüber hinaus betrifft die Druckschrift CN 101462698 A ein Verfahren zur Rezyklierung von Gips aus Rauchgasentschwefelungsanlagen (REA-Gips) sowie Kokereigas aus der Eisenherstellung. Dazu werden die Abgase aus der Sinterung durch eine Kalkputz enthaltende Rauchgasentschwefelungsanlage geleitet, wobei REA-Gips entsteht. Dieser wird anschließend unter Verwendung des Kokereigases als Reduktionsmittel kalziniert und das auf diese Weise erhaltene CaO erneut für den Sinterprozess verwendet.

Schließlich betrifft die Druckschrift WO 2007/098867 A1 ein Verfahren zur Behandlung von Abgasen aus Sinter- und Pelletanlagen, bei welchem dem Abgas aus einer Sinter- bzw. Pelletanlage stromaufwärts eines Gewebefilters trockenes Additiv zugegeben wird und das Additiv anschließend aus dem Abgas durch das Gewebefilter abgeschieden wird.

Der vorliegenden Erfindung liegt nunmehr die Aufgabe zugrunde, ein Verfahren zur Behandlung von Schwefeloxide enthaltenden Abgasen aus technischen Prozessen, insbesondere Verfahren zur Behandlung von aus der Roheisen- bzw. Stahlherstellung mittels Sinterung von Eisenerzen und nachfolgender Roheisenherstellung vom Hochofenprozeß stammenden Abgasen, zu Zwecken der Entfernung und/oder Abscheidung der Schwefeloxide oder zu Zwecken der Reduktion des Schwefeloxidgehalts sowie eine entsprechende Vorrichtung zur Durchführung dieses Verfahrens zur Verfügung zu stellen, wobei die zuvor geschilderten Nachteile des Standes der Technik zumindest weitgehend vermieden oder aber wenigstens abgeschwächt werden sollen.

Zur Lösung der zuvor geschilderten Aufgabe schlägt die vorliegende Erfindung gemäß einem ersten Erfindungsaspekt ein Verfahren nach Anspruch 1 vor; weitere, vorteilhafte Ausgestaltungen sind Gegenstand der diesbezüglichen abhängigen Ansprüche.

Wiederum weiterer Gegenstand der vorliegenden Erfindung ist gemäß einem zweiten Erfindungsaspekt eine Vorrichtung zur Durchführung des erfindungsgemäßen Verfahrens nach Anspruch 12; weitere, vorteilhafte Ausgestaltungen sind Gegenstand der diesbezüglichen abhängigen Ansprüche.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich beschrieben ist Solange sie unter die Ansprüche fallen.

Im übrigen gilt, daß der Fachmann anwendungsbezogen oder einzelfallbedingt von den nachfolgend in der Beschreibung aufgeführten Zahlen-, Wert- bzw. Bereichsangaben abweichen kann, ohne daß er den Rahmen der vorliegenden Erfindung verläßt, die durch die Ansprüche definiert ist. Gegenstand der vorliegenden Erfindung ist somit - gemäß einem **ersten** Aspekt der vorliegenden Erfindung - ein Verfahren zur Behandlung von aus der Roheisen- und/oder Stahlherstellung mittels Sinterung von Eisenerzen und nachfolgender Roheisenherstellung im Hochofenprozeß stammenden Abgasen zu Zwecken der Entfernung und/oder Abscheidung der Schwefeloxide oder zu Zwecken der Reduktion des Schwefeloxidgehalts,
wobei die im Rahmen der Roheisen- und/oder Stahlherstellung im Verfahrensschritt der Sinterung der Eisenerze und dem hierzu stromabwärts durchgeführten Verfahrensschritt der Roheisenherstellung jeweils anfallenden schwefeloxidhaltigen Abgase einer jeweils separaten Abgasbehandlung mittels mindestens eines Abgasbehandlungsreagenzes unterworfen werden, wobei:
- in einem Verfahrensschritt (a) zunächst die aus der Sinterung des Roheisenerzes stammenden Abgase mit überschüssigem Abgasbehandlungsreagenz behandelt werden, wobei das stöchiometrische Verhältnis von Abgasbehandlungsreagenz zu Schwefeloxiden in einem stöchiometrischen Verhältnis von Abgasbehandlungsreagenz zu Schwefeloxide im Bereich von 1,1 : 1 bis 20 : 1 liegt und Natriumcarbonat und/oder Natriumhydrogencarbonat als Abgasbehandlungsreagenz eingesetzt wird und wobei das Abgasbehandlungsreagenz in Form eines Pulvers feinverteilt in den Abgasstrom eingedüst und/oder eingesprüht wird, und
- nachfolgend in einem Verfahrensschritt (b) das nach der Behandlung der aus der Sinterung stammenden Abgase resultierende nichtumgesetzte Abgasbehandlungsreagenz zusammen mit umgesetztem Abgasbehandlungsreagenz für die Behandlung der aus der Roheisenherstellung stammenden Abgase (Gichtgase) eingesetzt wird.

Im allgemeinen wird die Abgasbehandlung in den Verfahrensschritten (a) und (b) jeweils in Gegenwart von Sauerstoff durchgeführt. Der Sauerstoff stammt vorteilhafterweise aus den zu behandelnden Abgasen selbst oder kann alternativ zugeführt werden, insbesondere in Form von Luft.

Verfahrensschritt (a) des erfindungsgemäßen Verfahrens wird im allgemeinen bei Atmosphärendruck, d. h. bei Drücken von etwa einem bar durchgeführt, während Verfahrensschritt (b) des erfindungsgemäßen Verfahrens im allgemeinen im Bereich von Atmosphärendruck bis zu einem Überdruck von etwa 3 bar durchgeführt wird, insbesondere wenn es sich bei den zu behandelnden Abgasen in Verfahrensschritt (b) um Gichtgase aus dem Hochofen handelt. Grundsätzlich ist jedoch eine Verfahrensfuhrung in den beiden Verfahrensschritten (a) und (b) auch bei von den angegebenen Werten bzw. Wertebereichen abweichenden Werten bzw. Wertebereichen möglich.

Gemäß der vorliegenden Erfindung wird bei der Abgasbehandlung der aus der Sinterung des Eisenerzes stammenden Abgase in Verfahrensschritt (a) das Abgasbehandlungsreagenz, insbesondere Entschwefelungsreagenz, in den Abgasstrom eingebracht und/oder eingetragen und/oder mit den Abgasen in Kontakt gebracht, insbesondere eingedüst und/oder eingesprüht bzw. wird bei der Abgasbehandlung der aus der Sinterung des Eisenerzes stammenden Abgase das Abgasbehandlungsreagenz, insbesondere Entschwefelungsreagenz, in Form eines Pulvers eingesetzt. Dabei wird im Rahmen der vorliegenden Erfindung bei der Abgasbehandlung der aus der Sinterung des Eisenerzes stammenden Abgase das Abgasbehandlungsreagenz, insbesondere Entschwefelungsreagenz, fein verteilt in den Abgasstrom eingedüst und/oder eingesprüht.

Im Rahmen der vorliegenden Erfindung hat es sich als vorteilhaft erwiesen, wenn bei der Abgasbehandlung der aus der Sinterung des Eisenerzes stammenden Abgase in Verfahrensschritt (a) das Abgasbehandlungsreagenz, insbesondere Entsehwefelungsreagenz, im Überschuß, insbesondere im stöchiometrischen Überschuß, in bezug auf die aus den Abgasen zu entfernenden Verbindungen, insbesondere Schwefeloxide, eingesetzt wird. Dabei beträgt im Rahmen der vorliegenden Erfindung der stöchiometrische Überschuß mindestens 1,1, besonders bevorzugt mindestens 1,2, ganz besonders bevorzugt mindestens 1,25.

Was die Größenordnung des stöchiometrischen Überschusses weiterhin anbelangt, so kann dieser in weiten Bereichen variieren. Im allgemein liegt der stöchiometrische Überschuß im Bereich von mindestens 1,1 bis 20, besonders bevorzugt mindestens 1,2 bis 10, ganz besonders bevorzugt mindestens 1,25 bis 5. Weiterhin liegt bei der Abgasbehandlung der aus der Sinterung des Eisenerzes stammenden Abgase das stöchiometrische Verhältnis von Abgasbehandlungsreagenz, insbesondere Entschwefelungsreagenz, zu aus den Abgasen zu entfernenden Verbindungen, insbesondere Schwefeloxiden, im allgemeinen im Bereich von 1,1:1 bis 20 : 1, bevorzugt von 1,2 : 1 bis 10 ; 1, besonders bevorzugt 1,25 : 1 bis 5 : 1, Ein solcher stöchiometrischer Überschuß des Abgasbehandlungsreagenzes ist notwendig, da bei der Abgasbehandlung der aus der Sinterung des Eisenerzes stammenden Abgase keine idealen Bedingungen zur Umsetzung des Abgasbehandlungsreagenzes herrschen, insbesondere aufgrund der ungünstigen Kombination von Temperatur und Volumenstrom der Abgase, so daß nach Möglichkeit zur vollständigen Entfernung bzw. Abscheidung der aus den Abgasen zu entfernenden Verbindungen ein stöchiometrischer Überschuß des Abgasbehandlungsreagenzes eingesetzt werden muß. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Im allgemeinen ist das mit der Abgasbehandlung der aus der Sinterung des Eisenerzes stammenden Abgase eingesetzte Abgasbehandlungsreagenz, insbesondere Entschwefelungsreagenz, imstande, schwefelhaltige Verbindungen, insbesondere Schwefeloxide, zu binden, insbesondere physikalisch und/oder chemisch zu binden, vorzugsweise unter chemischer Reaktion zu binden.

Gemäß der vorliegenden Erfindung umfaßt das bei der Abgasbehandlung der aus der Sinterung des Eisenerzes stammenden Abgase in Verfahrensschritt (a) eingesetzte Abgasbehandlungsreagenz, insbesondere Entschwefelungsreagenz, Natriumcarbonat und/oder Natriumhydrogencarbonat.

Die Abgasbehandlung der aus der Sinterung des Eisenerzes stammenden Abgase in Verfahrensschritt (a) wird durch die Reaktionen (1) und (2) verdeutlicht:

Der Abgasstrom wird mit Natriumhydrogencarbonat (NaHCO₃) in Kontakt gebracht, wobei dieses gemäß Reaktion (1) durch Temperatureinwirkung zu Natriumcarbonat (Na₂CO₃), Kohlendioxid (CO₂) und Wasser (H₂O) reagiert:

2 NaHCO₃ → Na₂CO₃ + CO₂ + H₂O (1)

Durch die Reaktion des Natriumhydrogencarbonats zu Natriumcarbonat werden die kleinen Kristalle, aus welchen das Natriumhydrogencarbonat besteht, zerstört, so daß mikrokristallines Natriumcarbonat mit einer großen spezifischen Oberfläche und somit hoher Reaktivität gebildet wird. Das Natriumcarbonat reagiert gemäß Reaktion (2) mit Schwefeldioxid (SO₂) in Gegenwart von Sauerstoff (O₂) zu Natriumsulfat (Na₂SO₄) und Kohlendioxid (CO₂), Auf diese Weise werden die Schwefeloxide, insbesondere das Schwefeldioxid, chemisch gebunden:

Na₂CO₃ + SO₂ + ½ O₂ → Na₂SO₄ + CO₂ (2)

Gemäß der vorliegenden Erfindung kann zur Abgasbehandlung der aus der Sinterung des Eisenerzes stammenden Abgase in Verfahrensschritt (a) als Abgasbehandlungsreagenz, insbesondere Entschwefelungsreagenz, Natriumcarbonat eingesetzt werden. Dabei kann es im Rahmen der vorliegenden Erfindung vorgesehen sein, daß das Natriumcarbonat unter den Abgasbehandlungsbedingungen in situ aus Natriumhydrogencarbonat generiert wird.

Weiterhin hat es sich im Rahmen der vorliegenden Erfindung als besonders vorteilhaft erwiesen, wenn bei der Abgasbehandlung der aus der Sinterung des Eisenerzes stammenden Abgase in Verfahrensschritt (a) die im Abgasstrom enthaltenen Schwefeloxide, insbesondere Schwefeldioxid, mit dem Abgasbehandlungsreagenz, insbesondere Entschwefelungsreagenz, in Gegenwart von Sauerstoff zu Natriumsulfat umgesetzt werden. Dabei kann es vorgesehen sein, daß ein Gemisch aus Natriumsulfat und nichtumgesetztem und/oder überschüssigem Abgasbehandlungsreagenz resultiert.

Im allgemeinen wird die Abgasbehandlung der aus der Sinterung des Eisenerzes stammenden Abgase in Verfahrensschritt (a) bei einer Temperatur im Bereich von 50 °C bis 1.500 °C, insbesondere 100 °C bis 1.300 °C, vorzugsweise 150 °C bis 1.000 °C, besonders bevorzugt 200 °C bis 800 °C, durchgeführt.

Für den Fall, daß die aus der Sinterung des Eisenerzes stammenden Abgase neben Schwefeloxiden weitere saure Gase, insbesondere Halogenwasserstoffe, wie Hydrogenchlorid, enthalten, kann es vorgesehen sein, daß die sauren Gase, insbesondere Halogenwasserstoffe, wie Hydrogenchlorid, ebenfalls mit dem Abgasbehandlungsreagenz, insbesondere Entschwefelungsreagenz, zur Reaktion gebracht werden, insbesondere unter Bildung von anorganischen Halogeniden, bevorzugt Natriumchlorid. Diese Reaktion wird bevorzugt dann durchgeführt, wenn als Abgasbehandlungsreagenz Natriumhydrogencarbonat und/oder Natriumcarbonat eingesetzt wird bzw, werden. Die sauren, zumeist korrosiven Gase, wie z. B. Halogenwasserstoffe, können somit zusammen mit den Schwefeloxiden aus den Abgasen entfernt werden und greifen die Anlagen, durch welche die Abgase geleitet werden, nicht an und gelangen auch nicht in die Umwelt.

Im allgemeinen wird nach der Behandlung der aus der Sinterung stammenden Abgase resultierendes nichtumgesetztes und/oder überschüssiges Abgasbehandlungsreagenz zusammen mit umgesetztem Abgasbehandlungsreagenz, insbesondere das Gemisch aus nichtumgesetztem und/oder überschüssigem Abgasbehandlungsreagenz und anorganischem Sulfat, mit einer Flüssigkeit, insbesondere Wasser, versetzt bzw. in einer Flüssigkeit, insbesondere Wasser, dispergiert und/oder gelöst. Dabei kann es vorgesehen sein, daß die resultierenden Mischungen und/oder Dispersionen und/oder Lösungen nachfolgend für die Behandlung der aus der Roheisenherstellung stammenden Abgase eingesetzt werden. Üblicherweise werden die Abgase aus der Roheisenherstellung mit den resultierenden Mischungen und/oder Dispersionen und/oder Lösungen in Kontakt gebracht, wobei entweder die Abgase aus der Roheisenherstellung in die Mischungen und/oder Lösungen und/oder Dispersionen eingeleitet werden oder aber die Mischungen und/oder Lösungen und/oder Dispersionen feinverteilt in den Abgasstrom eingebracht werden, insbesondere eingedüst und/oder eingesprüht werden.

Im allgemeinen wird bei der Behandlung der aus der Roheisenherstellung stammenden Abgase in Verfahrensschritt (b) das in Verfahrensschritt (a) nichtumgesetzte und/oder überschüssige Abgasbehandlungsreagenz in Gegenwart des in Verfahrensschritt (a) bereits umgesetzten Abgasbehandlungsreagenzes, insbesondere in Form einer vorzugsweise wäßrigen Dispersion und/oder Lösung, mit den aus der Roheisenherstellung stammenden Abgasen in Kontakt gebracht. Hierbei kann es vorgesehen sein, daß das in Verfahrensschritt (a) nichtumgesetzte und/oder überschüssige Abgasbehandlungsreagenz in Gegenwart von Sauerstoff zu Natriumsulfat umgesetzt wird.

Was die Temperatur der aus der Roheisenherstellung stammenden Abgase in Verfahrensschritt (b) anbelangt, so kann diese in weiten Bereichen variierten. Im allgemeinen liegt die Temperatur der aus der Roheisenherstellung stammenden Abgase im Bereich von 100 °C bis 2.000 °C, insbesondere 150 °C bis 1.500 °C, vorzugsweise 200 °C bis 1.250 °C. Anwendungsbezogen oder einzelfallbedingt ist es jedoch nicht ausgeschlossen, von den vorgenannten Temperaturwerten abzuweichen, ohne daß der Rahmen der vorliegenden Erfindung verlassen ist; dies zu entscheiden liegt im fachmännischen Können bzw. im Ermessen des auf diesem Gebiet tätigen Fachmanns.

Im allgemeinen wird im Anschluß an Verfahrensschritt (b) das umgesetzte Abgasbehandlungsreagenz von Schwermetallen und/oder Flugstäuben befreit und/oder abgetrennt. Gemäß einer bevorzugten Ausführungsform der vorliegenden Erfindung wird im Anschluß an Verfahrensschritt (b) das umgesetzte Behandlungsreagenz mittels Flotation und/oder Filtration und/oder Sedimentation von Schwermetallen und/oder Flugstäuben abgetrennt. Die Reaktionsprodukte bzw. das umgesetzte Abgasbehandlungsreagenz liegen bzw. liegt hierbei bevorzugt schon mit einer Flüssigkeit versetzt und/oder gelöst und/oder dispergiert vor, wobei besonders bevorzugt Wasser als Flüssigkeit bzw. Lösemittel oder Dispergiermittel verwendet wird, Die Abtrennung der Schwermetalle und/oder Flugstäube von dem umgesetzten Abgasbehandlungsreagenz beruht auf dem Fachmann an sich bekannte Methoden.

Im Rahmen der vorliegenden Erfindung kann es weiterhin vorgesehen sein, daß im Anschluß an Verfahrensschritt (b) das umgesetzte Abgasbehandlungsreagenz in Form von Natriumsulfat weiter umgesetzt wird, bevorzugt zu Calciumsulfat, insbesondere in Form von Gips.

Im allgemeinen enthalten die aus der Roheisenherstellung stammenden Abgase auch Kohlenmonoxid und Kohlendioxid. Beide Gase können in speziellen Ausführungsformen des erfindungsgemäßen Verfahrens weiter genutzt werden.

Gemäß einer besonderen Ausführungsform wird im Anschluß an Verfahrensschritt (b) das im Abgas aus der Roheisenherstellung enthaltene Kohlenmonoxid zumindest im wesentlichen von den übrigen Bestandteilen der Abgase, insbesondere von Kohlendioxid, getrennt und in den Verfahrensschritt der Roheisenherstellung zurückgeführt. Das Kohlenmonoxid kann dann in der Roheisenherstellung direkt als Reduktionsmittel eingesetzt werden. Wie oben geschildert, wird das im aus der Roheisenherstellung stammenden Abgase enthaltene Kohlenmonoxid zumindest im wesentlichen von den übrigen Bestandteilen der Abgase getrennt. Dies bedeutet, daß alle den Hochofenprozeß möglicherweise beeinträchtigenden oder störenden Abgase entfernt werden, nicht jedoch unkritische Gase, wie z. B. Stickstoff. Die Trennung vom Kohlendioxid, welches durch seine oxidierenden Eigenschaften den Hochofenprozeß möglicherweise beeinträchtigen würde, kann durch Auswaschen bzw. Umsetzen des Kohlendioxids erfolgen, wie im folgenden beschrieben.

Im allgemeinen wird bzw. werden bei Durchführung des erfindungsgemäßen Verfahrens das umgesetzte Abgasbehandlungsreagenz und gegebenenfalls weitere Abgasbehandlungsprodukte über alle Abgasbehandlungsschritte, insbesondere über die Verfahrensschritte (a) und (b), angesammelt und/oder kumuliert, insbesondere ohne zwischengeschaltete Aufbereitungs- und/oder Abtrennschritte.

Gemäß einer bevorzugten Ausführungsform der vorliegenden Erfindung wird bzw. werden das umgesetzte Abgasbehandlungsreagenz und gegebenenfalls weitere Abgasbehandlungsprodukte über alle Abgasbehandlungsschritte angesammelt bzw. kumuliert, wobei erst nach dem letzten Abgasbehandlungsschritt, insbesondere nach Verfahrensschritt (b), die über alle Abgasbehandlungsschritte kumulierten und/oder angesammelten umgesetzten Abgasbehandlungsprodukte gemeinsam aufbereitet werden, insbesondere getrennt und nachfolgend ihrer bestimmungsgemäßen Verwendung zugeführt werden, insbesondere der Weiterverarbeitung, Rezyklierung und/oder Entsorgung.

Unter dem Begriff weitere Abgasbehandlungsprodukte sollen im Rahmen der vorliegenden Erfindung in erster Linie im Zuge der Abgasbehandlung mitabgeschiedene Schwermetalle, schwermetallhaltige Verbindungen und Flugstäube verstanden werden. Im Falle eines flüssigen bzw. mit einer Flüssigkeit versetzten Abgasbehandlungsreagenzes können diese auch als Schlämme oder Dispersionen vorliegen. Ferner sind unter dem Begriff der weiteren Abgasbehandlungsprodukte auch die Umsetzungsprodukte anderer saurer Gase, wie Halogenwasserstoffe, insbesondere Hydrogenchlorid, mit dem Abgasbehandlungsreagenz zu verstehen. Im allgemeinen sind unter dem Begriff der Abgasbehandlungsprodukte alle im Zuge der Abgasbehandlung anfallenden flüssigen und festen Rückstände zu verstehen, d. h. zuzüglich zu den bereits genannten Substanzen bzw. Substanzklassen sind unter den Abgasbehandlungsprodukten auch umgesetztes bzw. nichtumgesetztes Abgasbehandlungsreagenz sowie gegebenenfalls verwendete Löse- bzw. Dispergiermittel zu verstehen.

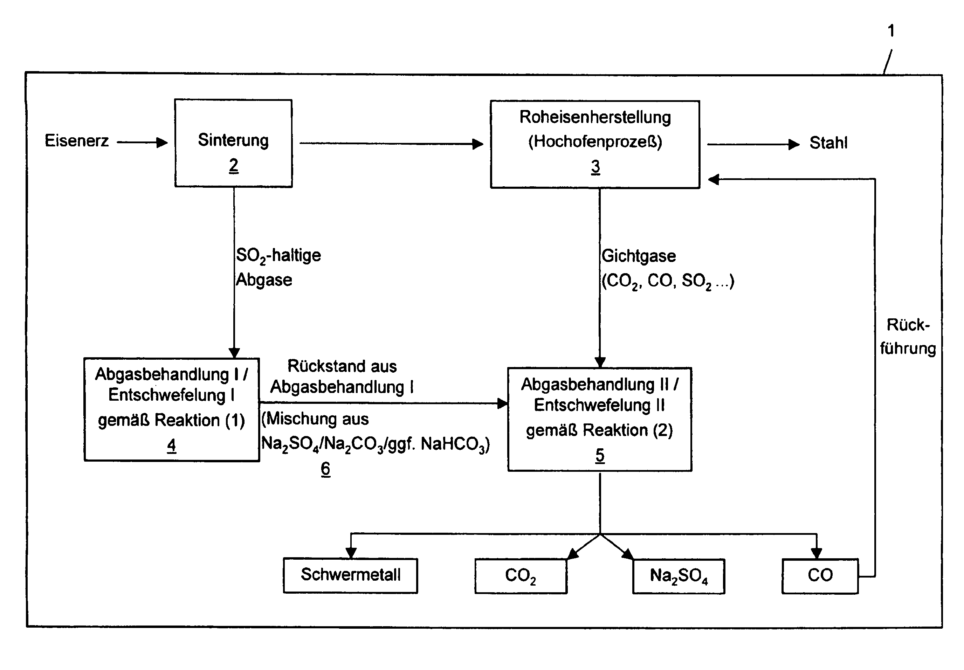

Gegenstand der vorliegenden Erfindung ist - gemäß einem **zweiten** Aspekt der vorliegenden Erfindung - eine in der einzigen Figur dargestellte Vorrichtung 1 zur Durchführung eines Verfahrens zur Behandlung von aus der Roheisen- und/oder Stahlherstellung mittels Sinterung von Eisenerzen und nachfolgender Roheisenherstellung im Hochofenprozeß stammenden Abgasen zu Zwecken der Entfernung und/oder Abscheidung der Schwefeloxide oder zu Zwecken der Reduktion des Schwefeloxidgehalts, insbesondere zur Durchführung eines wie zuvor beschriebenen Verfahrens gemäß dem ersten bis fünften Erfindungsaspekt, wobei die Vorrichtung 1
- eine Einrichtung 2 zur Durchführung eines ersten, schwefeloxidhaltige Abgase erzeugenden technischen Prozeßschrittes, nämlich eine Sintereinrichtung zur Sinterung von Eisenerzen wobei der Einrichtung 2 eine Abgasbehandlungseinrichtung I 4 zur Abgasbehandlung der in der Einrichtung 2 erzeugten schwefeloxidhaltigen Abgase zugeordnet und/oder nachgeschaltet ist, und wobei die Abgasbehandlungseinrichtung I (4) mindestens eine Einrichtung zum Feinverteilen und Eintragen eines festen Abgasbehandlungsreagenzes aufweist, und
- mindestens eine stromabwärts zur Einrichtung 2 angeordnete Einrichtung 3 zur Durchführung eines zweiten, schwefeloxidhaltige Abgase erzeugenden technischen Prozeßschrittes, nämlich eine Einrichtung zur Erzeugung von Roheisen im Hochofenprozeß, wobei der Einrichtung 3 eine Abgasbehandlungseinrichtung II 5 zur Abgasbehandlung der in der Einrichtung 3 erzeugten schwefeloxidhaltigen Abgase zugeordnet und/oder nachgeschaltet ist,
umfaßt, wobei die Vorrichtung 1 eine Überführungseinrichtung 6 zur Überführung des Abgasbehandlungsreagenzes von der Abgasbehandlungeinrichtung I 4 in die ,Abgasbehandlungseinrichtung II 5 aufweist.

Im Rahmen der vorliegenden Erfindung hat es sich als vorteilhaft erwiesen, wenn die Abgasbehandlungeinrichtung I 4 und/oder die Abgasbehandlungseinrichtung II 5 Mittel zum Einführen und/oder Einleiten von Sauerstoff, insbesondere Luft, aufweist, insbesondere in Form von Düsen, Einleitungsrohren oder dergleichen.

Im allgemeinen umfaßt die Abgasbehandlungseinrichtung I 4 Mittel zum Inkontaktbringen eines festen Abgasbehandlungsreagenzes mit dem Abgasstrom. Hierbei ist es vorgesehen, daß die Abgasbehandlungseinrichtung I 4 mindestens eine Einrichtung zum Feinverteilen, insbesondere Eindüsen und/oder Einsprühen, und Eintragen eines festen Abgasbehandlungsreagenzes, insbesondere in Form von Düsen, Einleitungsrohren oder dergleichen, aufweist.

Gemäß einer besonderen Ausführungsform der vorliegenden Erfindung weist die Abgasbehandlungseinrichtung I 4 Mittel zur Steuerung der Temperatur der aus der Sinterung des Eisenerzes stammenden Abgase auf. Hierbei kann die Temperatur der Abgase in der Abgasbehandlungseinrichtung I 4 im Bereich von 50 °C bis 1.500 °C, insbesondere 100 °C bis 1.300°C, vorzugsweise 150 °C bis 1.000 °C, besonders bevorzugt 200 °C bis 800 °C, steuerbar sein.

Im allgemeinen umfaßt die Abgasbehandlungseinrichtung II 5 Mittel zum Inkontaktbringen eines vorzugsweise in Lösung oder Dispersion vorliegenden Abgasbehandlungsreagenzes mit dem Abgasstrom. Dabei kann es vorgesehen sein, daß die Abgasbehandlungseinrichtung II 5 mindestens eine Einrichtung zum Feinverteilen, insbesondere Eindüsen und/oder Einsprühen, und Eintragen eines vorzugsweise in Lösung oder Dispersion vorliegenden Abgasbehandlungsreagenzes in den Abgasstrom, insbesondere in Form von Düsen, Einleitungsrohren oder dergleichen, oder aber eine Einrichtung zum Einleiten des Abgasstroms in einen dieser Einrichtung zugeordneten Reaktor mit einer Lösung oder Dispersion des Abgasbehandlungsreagenzes aufweist.

Im Rahmen der vorliegenden Erfindung kann es vorgesehen sein, daß die Abgasbehandlungseinrichtung II 5 Mittel zur Steuerung der Temperatur aufweist. Hierbei kann die Temperatur der Abgase in der Abgasbehandlungseinrichtung II 5 im Bereich von 100 °C bis 2.000 °C, insbesondere 150 °C bis 1.500 °C, vorzugsweise 200 °C bis 1.250 °C, steuerbar sein.

Gemäß einer besonders bevorzugten Ausführungsform der vorliegenden Erfindung weist die Überführungseinrichtung 6 Mittel zum Überführen eines als Feststoff vorliegenden Abgasbehandlungsreagenzes in eine Lösung oder Dispersion auf. Alternativ oder ergänzend hierzu kann die Überführungseinrichtung 6 Mittel zum Fördern eines Abgasbehandlungsreagenzes von der Abgasbehandlungseinrichtung I 4 in die Abgasbehandlungseinrichtung II 5 aufweisen.

Erfingdungsgemäß kann es vorgesehen sein, daß stromabwärts zur Abgasbehandlungseinrichtung II 5 eine Abtrenneinrichtung zur Abtrennung von Schwermetallen, Schwermetallverbindungen und/oder Flugstäuben von den aus der Abgasbehandlungseinrichtung II 5 stammenden Abgasbehandlungsprodukten angeordnet ist. Hierbei kann es vorgesehen sein, daß die Trenneinrichtung Mittel zur Flotation und/oder Filtration und/oder Sedimentation aufweist.

Gemäß einer besonderen Ausführungsform der vorliegenden Erfindung ist stromabwärts zur Abgasbehandlungseinrichtung II 5 eine Gipsherstelleinrichtung zur Umsetzung des aus der Abgasbehandlungseinrichtung II 5 stammenden Abgasbehandlungsreagenzes zu Calciumsulfat, insbesondere in Form von Gips, angeordnet. Im Rahmen der vorliegenden Erfindung kann die stromabwärts zur Abgasbehandlungseinrichtung II 5 angeordnete Gipsherstelleinrichtung getrennt und/oder dezentral betreibbar sein.

Gemäß einer wiederum besonderen Ausführungsform der vorliegenden Erfindung ist stromabwärts zur Abgasbehandlungseinrichtung II 5 eine weitere Abtrenneinrichtung zur Abtrennung des im Abgasstrom enthaltenen Kohlenmonoxids von den übrigen Bestandteilen der Abgase, insbesondere von im Abgas enthaltenen Kohlendioxid, angeordnet. Dabei kann es vorgesehen sein, daß stromabwärts zu der weiteren Abtrenneinrichtung eine Rückführeinrichtung zur Rückführung des abgetrennten Kohlenmonoxids in die Einrichtung 3 zur Durchführung eines zweiten, schwefeloxidhaltige Abgase erzeugenden technischen Prozeßschrittes, insbesondere eine Einrichtung 3 zur Erzeugung von Roheisen, vorzugsweise im Hochofenprozeß, angeordnet ist.

Weiterhin kann es im Rahmen der vorliegenden Erfindung vorgesehen sein, daß stromabwärts zur Abgasbehandlungseinrichtung II 5 eine Einrichtung zur Umsetzung des im Abgasstrom enthaltenen Kohlendioxids, insbesondere eine Einrichtung zur Herstellung von Abgasbehandlungsreagenz, angeordnet ist.

Für weitergehende Einzelheiten zu der erfindungsgemäßen Vorrichtung bzw. Anlage kann auf die obigen Ausführungen zu dem ersten Erfindungsaspekt verwiesen werden, welche in bezug auf die erfindungsgemäße Vorrichtung bzw. Anlage entsprechend gelten.

Die einzige Figurendarstellung zeigt in schematischer und rein veranschaulichender, insbesondere rein beispielhafter Darstellung eine typische, bevorzugte Ausführungsform des erfindungsgemäßen Verfahrensablaufs bzw. der erfindungsgemäßen Vorrichtung (Anlage).

Wie die Figur zeigt, wird Eisenerz im Rahmen des erfindungsgemäßen Verfahrens bzw. in der erfindungsgemäßen Vorrichtung bzw. Anlage 1 zunächst in 2 einer Sinterung unterzogen, woran sich dann, gegebenenfalls nach weiteren, zwischengeschalteten Verfahrensschritten, die Roheisenherstellung, bevorzugt im Hochofenprozeß, in 3 anschließt, wobei das resultierende Roheisen dann letztendlich zu Stahl weiterverarbeitet wird.

Wie die Figur weiter zeigt, werden die im Rahmen des Prozesses der Roheisen- und/oder Stahlherstellung im Verfahrensschritt der Sinterung der Eisenerze 2 und im hierzu stromabwärts durchgeführten Verfahrensschritt der Roheisenherstellung 3 jeweils anfallenden schwefeloxidhaltigen Abgase einer jeweils separaten Abgasbehandlung 4 bzw. 5, insbesondere Entschwefelung, mittels mindestens eines Abgasbehandlungsreagenzes, insbesondere Entschwefelungsreagenzes, typischerweise Natriumcarbonat und/oder Natriumhydrogencarbonat, unter Verfahrensbedingungen typischerweise Natriumcarbonat, unterworfen.

Im Rahmen der Abgasbehandlung I bzw. Entschwefelung I in 4, welche typischerweise gemäß den obengenannten Reaktionen (1) und (2) verläuft, werden zunächst die aus der Sinterung 2 des Roheisenerzes stammenden schwefeloxidhaltigen Abgase mit überschüssigem Abgasbehandlungsreagenz behandelt, wobei bei dieser Behandlung das Abgasbehandlungsreagenz in feinverteilter Form eingesetzt wird. Das hierbei resultierende Gemisch aus nichtumgesetztem bzw. überschüssigem Abgasbehandlungsreagenz (z. B. Natriumcarbonat und/oder Natriumhydrogencarbonat Na₂CO₃ und/oder NaHCO₃) einerseits und umgesetztem Abgasbehandlungsreagenz (z. B. Natriumsulfat Na₂SO₄) andererseits wird dann, typischerweise nach Überführung in 6 in eine entsprechende Lösung oder Dispersion, dann bei 5 für die Abgasbehandlung II bzw. Entschwefelung II der aus der Roheisenherstellung stammenden Abgase (Gichtgase), welche typischerweise neben Kohlendioxid und Kohlenmonoxid auch Schwefeloxiden enthalten, eingesetzt, wobei die in 5 verlaufende Abgasbehandlung II bzw. Entschwefelung II typischerweise gemäß den obengenannten Reaktionen (1) und (2) verläuft.

In bevorzugter Ausführungsform wird also, wie zuvor beschrieben, bei der Abgasbehandlung I der aus der Sinterung 2 des Eisenerzes stammenden Abgase das Abgasbehandlungsreagenz in Form eines Feststoffes eingesetzt, insbesondere in den Abgasstrom I eingebracht und/oder eingetragen und/oder mit den Abgasen I in Kontakt gebracht, und nachfolgend das resultierende Gemisch aus umgesetztem Abgasbehandlungsreagenz einerseits und nichtumgesetztem bzw. überschüssigem Abgasbehandlungsreagenz andererseits in einer Flüssigkeit, insbesondere Wasser, dispergiert und/oder gelöst, wobei die auf diese Weise hergestellte Dispersion oder Lösung anschließend für die Abgasbehandlung II bzw. Entschwefelung II der aus der Roheisenherstellung 3 stammenden Abgase II eingesetzt wird.

Die in der Abgasbehandlung I und II anfallenden Schwermetalle als Nebenprodukte der Abgasbehandlung können durch übliche Trennverfahren, wie z. B. Flotation, Sedimentation, Filtration oder dergleichen abgetrennt und nachfolgend der Entsorgung zugeführt werden. Das als Hauptprodukt der Entschwefelung gebildete Natriumsulfat kann gegebenenfalls der Gipslaerstellung zugeführt werden, insbesondere wie zuvor beschrieben, beispielsweise durch Behandlung mit einer Calciumhalogenidlösung oder dergleichen.

Die ebenfalls im Rahmen des Prozesses der Roheisen- bzw. Stahlherstellung anfallenden Prozeßgase Kohlenmonoxid und Kohlendioxid können gleichfalls wiederverwertet werden: So kann das insbesondere aus den Gichtgasen stammende Kohlendioxid beispielsweise zur Herstellung von Abgasbehandlungs- bzw. Entschwefelungsreagenz, insbesondere zur Herstellung von Natriumhydrogencarbonat und/oder Natriumcarbonat, eingesetzt werden, welches dann wieder als Abgasbehandlungsreagenz zur Verfügung steht, während das Kohlenmonoxid wieder in die Roheisenherstellung zurückgeführt werden kann.

Für weitergehende Einzelheiten kann auf die obigen Ausführungen zum allgemeinen Teil verwiesen werden.

Im Ergebnis liefert die vorliegende Erfindung somit ein hocheffizientes Verfahren bzw. eine hocheffiziente Vorrichtung bzw. Anlage zur Behandlung von aus der Roheisen- und/oder Stahlherstellung mittels Sinterung von Eisenerzen und nachfolgender Roheisenherstellung im Hochofenprozeß stammenden Abgasen, wobei die in den Abgasen enthaltenen Schwefeloxide in effizienter Weise entfernt bzw. abgeschieden oder aber wenigstens ihr Gehalt reduziert wird.

Das erfindungsgemäße Verfahren bzw. die erfindungsgemäße Vorrichtung sind mit einer Vielzahl von Vorteilen und Besonderheiten verbunden, welche ein Indiz für das Vorliegen der Patentfähigkeit, insbesondere der erfinderischen Tätigkeit, sind und von denen nachfolgend nur beispielhaft und nicht beschränkend die folgenden aufgeführt sind:

Die vorliegende Erfindung stellt erstmals eine effizient wie ökonomisch arbeitende Vorrichtung bzw. ein entsprechendes Verfahren zur zumindest im wesentlichen vollständigen Gesamtentfernung der Schwefeloxide aus allen im Prozeß der Roheisen- bzw. Stahlherstellung insgesamt anfallenden Abgasen, insbesondere sowohl aus der Sinterung als auch aus der Roheisenherstellung selbst, bereit.

Infolge der Tatsache, daß die Abgasbehandlung bzw. Entschwefelung der aus der Sinterung stammenden Abgase nur wenig effizient verläuft und einen stöchiometrischen Überschuß an Abgasbehandlungs- bzw. Entschwefelungsreagenz erfordert, wurde im Stand der Technik eine derartige Entschwefelung bislang nicht in Betracht gezogen, da sie allenfalls unvollständig bzw. wenig ökonomisch durchgeführt werden kann. Erst aufgrund der Erkenntnis, daß sich das aus der Abgasbehandlung der aus der Sinterung stammenden Abgase resultierende Abgasbehandlungsreagenz auch für die getrennt durchgeführte Abgasbehandlung der aus der Roheisenherstellung stammenden Abgase einsetzten läßt, sofern bei der Abgasbehandlung der aus der Sinterung stammenden Abgase mit einem entsprechenden Überschuß an Abgasbehandlungsreagenz verfahren wird, ermöglicht die erfindungsgemäße Lösung dieses im Stand der Technik aufgetretenen und ungelöst gebliebenen Problems. In höchstwirtschaftlicher wie höchsteffizienter Weise wird also das entsprechende Abgasbehandlungsreagenz sozusagen zweifach eingesetzt, so daß sich die entsprechenden Entschwefelungsprodukte und auch unerwünschte Nebenprodukte über die verschiedenen Abgasbehandlungsschritte ansammeln bzw. kumulieren und dann erst in einem abschließenden Verfahrensschritt aufgetrennt werden müssen.

Die Abgasbehandlungsprodukte, insbesondere die zu entsorgenden Schadstoffe als auch die weiterzuverwendenden bzw. zu rezyklierenden Bestandteile, werden über mehrere Verfahrensschritte kumuliert bzw, gesammelt und anschließend gemeinsam weiterbehandelt. Es entfällt somit eine aufwendige Weiterbehandlung und Entsorgung der Abgasbehandlungsprodukte für jeden einzelnen Verfahrensschritt. Dadurch, daß die Abgasbehandlungsprodukte kumuliert bzw. gesammelt werden, muß nur ein einziger Entsorgungs- bzw. Rezyklierungs- bzw, Wiederaufbereitungsprozeß durchgeführt werden anstelle einer Weiterbehandlung der Abgasbehandlungsprodukte für jeden einzelnen Verfahrensschritt. Die Kosten für die Weiterbehandlung fallen somit nur ein einziges Mal an.

Die bei der Abgasbehandlung resultierenden Produkte können zum Teil in effizienter Weise weiter genutzt werden: Umgesetztes Abgasbehandlungsreagenz, insbesondere in Form von Natriumsulfat, kann beispielsweise für die Gipsherstellung genutzt werden, während gleichermaßen anfallendes Kohlendioxid für die Herstellung von frischem Abgasbehandlungsreagenz, insbesondere Natriumcarbonat und/oder Natriumhydrogencarbonat, verwendet werden kann, während auf diese Weise abgetrenntes Kohlenmonoxid wieder in die Roheisenherstellung zurückgeführt werden kann. Des weiteren lassen sich die unerwünschten Nebenprodukte, insbesondere die Schwermetalle, vorzugsweise in Form von Schwermetallschlämmen, ohne weiteres am Ende aller Abgasbehandlungsschritte abtrennen und der Entsorgung zuführen. Insgesamt werden daher die Aufbereitungs- und Entsorgungskosten in optimaler Weise minimiert.

Typischerweise werden die gesamten Entsorgungskosten gegenüber der herkömmlichen Verfahrensweise um 80 % reduziert, was sowohl in ökonomischer wie in ökologischer Hinsicht von großem Vorteil ist.

Das erfindungsgemäße Verfahren sowie die erfindungsgemäße Vorrichtung werden dem steigenden Umweltbewußtsein und den stetig strenger werdenden Umweltanforderungen in effizienter wie ökonomischer Weise gerecht.

Das erfindungsgemäße Konzept läßt sich auch auf andere Anwendungen übertragen, insbesondere auf unterschiedliche technische Prozesse, bei denen Schwefeloxiden enthaltende Abgase anfallen. So befinden auf den Werksgeländen von Stahlwerken oftmals auch Kokereien, welche gleichermaßen - wie bei der Stahlherstellung - unter anderem Schwefeloxide enthaltende Abgase produzieren. Diesbezüglich besteht dann beispielsweise die Möglichkeit, zunächst die bei einem ersten technischen Prozeß, insbesondere der Stahlherstellung (z. B. bei der Eisenerzsinterung etc.), anfallenden schwefeloxidhaltigen Abgase in einem ersten Verfahrensschritt mit überschüssigem Abgasbehandlungsreagenz zu behandeln und nachfolgend in einem zweiten Verfahrensschritt das nach der Behandlung der aus dem ersten technischen Prozeß stammenden Abgase resultierende Gemisch aus nichtumgesetztem Abgasbehandlungsreagenz und umgesetztem Abgasbehandlungsreagenz für die Behandlung der aus einem zweiten Prozeß stammenden Abgase (z. B. Kokereigase) einzusetzen.

## Patentansprüche

1. Verfahren zur Behandlung von aus der Roheisen- und/oder Stahlherstellung mittels Sinterung von Eisenerzen und nachfolgender Roheisenherstellung im Hochofenprozeß stammenden Abgasen zu Zwecken der Entfernung und/oder Abscheidung der Schwefeloxide oder zu Zwecken der Reduktion des Schwefeloxidgehalts,
**dadurch gekennzeichnet,**
**daß** die im Rahmen der Roheisen- und/oder Stahlherstellung im Verfahrensschritt der Sinterung der Eisenerze und im hierzu stromabwärts durchgeführten Verfahrensschritt der Roheisenerstellung jeweils anfallenden schwefeloxidhaltigen Abgase einer jeweils separaten Abgasbehandlung mittels mindestens eines Abgasbehandlungsreagenzes unterworfen werden, wobei:
- in einem Verfahrensschritt a zunächst die aus der Sinterung des Roheisenerzes stammenden Abgase mit überschüssigem Abgasbehandlungsreagenz behandelt werden, wobei das stöchiometrische Verhältnis von Abgasbehandlungsreagenz zu Schwefeloxiden in einem stöchiometrischen Verhältnis von Abgasbehandlungsreagenz zu Schwefeloxiden im Bereich von 1,1 : 1 bis 20 : 1 liegt und Natriumcarbonat und/oder Natriumhydrogencarbonat als Abgasbehandlungsreagenz eingesetzt wird und wobei das Abgasbehandlungsreagenz in Form eines Pulvers feinverteilt in den Abgasstrom eingedüst und/oder eingesprüht wird, und
- nachfolgend in einem Verfahrensschritt b das nach der Behandlung der aus der Sinterung stammenden Abgase resultierende nichtumgesetzte Abgasbehandlungsreagenz zusammen mit umgesetztem Abgasbehandlungsreagenz für die Behandlung der aus der Roheisenherstellung stammenden Abgase eingesetzt wird.

2. Verfahren nach Anspruch 1, **dadurch gekennzeichnet, daß** die Abgasbehandlung in den Verfahrensschritten a und b jeweils in Gegenwart von Sauerstoff durchgeführt wird.

3. Verfahren nach Anspruch 1 oder 2, **dadurch gekennzeichnet, daß** bei der Abgasbehandlung der aus der Sinterung des Eisenerzes stammenden Abgase in Verfahrensschritt a das stöchiometrische Verhältnis von Abgasbehandlungsreagenz, insbesondere Entschwefelungsreagenz, zu Schwefeloxiden im Bereich von 1,2 : 1 bis 10 : 1, besonders bevorzugt 1,25 : 1 bis 5 : 1, liegt.

4. Verfahren nach einem der vorangehenden Ansprüche, **dadurch gekennzeichnet, daß** bei der Abgasbehandlung der aus der Sinterung des Eisenerzes stammenden Abgase in Verfahrensschritt a die im Abgasstrom enthaltenen Schwefeloxide, insbesondere Schwefeldioxid, mit dem Abgasbehandlungsreagenz, insbesondere Entschwefelungsreagenz, in Gegenwart von Sauerstoff zu Natriumsulfat umgesetzt werden, insbesondere wobei ein Gemisch aus Natriumsulfat und nichtumgesetztem und/oder überschüssigem Abgasbehandlungsreagenz resultiert.

5. Verfahren nach einem der vorhergehenden Ansprüche, **dadurch gekennzeichnet, daß** die Abgasbehandlung der aus der Sinterung des Eisenerzes stammenden Abgase in Verfahrensschritt a bei einer Temperatur im Bereich von 50 °C bis 1.500 °C, insbesondere 100 °C bis 1.300 °C, vorzugsweise 150 °C bis 1.000 °C, besonders bevorzugt 200 °C bis 800 °C, durchgeführt wird.

6. Verfahren nach einem der vorhergehenden Ansprüche, **dadurch gekennzeichnet, daß** die aus der Sinterung stammenden Abgase neben Schwefeloxiden weitere saure Gase, insbesondere Halogenwasserstoffe, wie Hydrogenchlorid, enthalten, insbesondere wobei die sauren Gase, insbesondere Halogenwasserstoffe, wie Hydrogenchlorid, gleichermaßen mit dem Abgasbehandlungsreagenz, insbesondere Entschwefelungsreagenz, zur Reaktion gebracht werden, insbesondere unter Bildung von anorganischen Halogeniden, bevorzugt Natriumchlorid.

7. Verfahren nach einem der vorhergehenden Ansprüche, **dadurch gekennzeichnet, daß** nach der Behandlung der aus der Sinterung stammenden Abgase gemäß Verfahrensschritt a resultierendes nichtumgesetztes und/oder überschüssiges Abgasbehandlungsreagenz zusammen mit umgesetztem Abgasbehandlungsreagenz, insbesondere das Gemisch aus nichtumgesetztem und/oder überschüssigem Abgasbehandlungsreagenz und anorganischem Sulfat, mit einer Flüssigkeit, insbesondere Wasser, versetzt und/oder in einer Flüssigkeit, insbesondere Wasser, dispergiert und/oder gelöst wird, insbesondere wobei die resultierenden Mischungen und/oder Dispersionen und/oder Lösungen nachfolgend für die Behandlung der aus der Roheisenherstellung stammenden Abgase eingesetzt werden.

8. Verfahren nach einem der vorhergehenden Ansprüche, **dadurch gekennzeichnet, daß** bei der Behandlung der aus der Roheisenherstellung stammenden Abgase in Verfahrensschritt b das in Verfahrensschritt a nichtumgesetzte und/oder überschüssige Abgasbehandlungsreagenz in Gegenwart des in Verfahrensschritt a bereits umgesetzten Abgasbehandlungsreagenzes, insbesondere in Form einer vorzugsweise wäßrigen Dispersion und/oder Lösung, mit den aus der Roheisenherstellung stammenden Abgasen in Kontakt gebracht wird, insbesondere wobei das in Verfahrensschritt a nichtumgesetzte und/oder überschüssige Abgasbehandlungsreagenz in Gegenwart von Sauerstoff zu Natriumsulfat umgesetzt wird.

9. Verfahren nach einem der vorhergehenden Ansprüche, **dadurch gekennzeichnet, daß** im Anschluß an Verfahrensschritt b das umgesetzte Abgasbehandlungsreagenz von Schwermetallen und/oder Flugstäuben befreit und/oder abgetrennt wird, insbesondere mittels Flotation und/oder Filtration und/oder Sedimentation abgetrennt wird.

10. Verfahren nach einem der vorhergehenden Ansprüche, **dadurch gekennzeichnet, daß** im Anschluß an Verfahrensschritt b das umgesetzte Abgasbehandlungsreagenz in Form von Natriumsulfat weiter umgesetzt wird, bevorzugt zu Calciumsulfat, insbesondere in Form von Gips.

11. Verfahren nach einem der vorhergehenden Ansprüche, **dadurch gekennzeichnet, daß** das umgesetzte Abgasbehandlungsreagenz und gegebenenfalls weitere Abgasbehandlungsprodukte über alle Abgasbehandlungsschritte, insbesondere über die Verfahrensschritte a und b, angesammelt und/oder kumuliert wird/werden, insbesondere ohne zwischengeschaltete Aufbereitungs- und/oder Abtrennschritte, insbesondere wobei erst nach dem letzten Abgasbehandlungsschritt, insbesondere nach Verfahrensschritt b, die über alle Abgasbehandlungsschritte kumulierten und/oder angesammelten umgesetzten Abgasbehandlungsprodukte gemeinsam aufbereitet werden, insbesondere getrennt und nachfolgend ihrer bestimmungsgemäßen Verwendung zugeführt werden, insbesondere der Weiterverarbeitung, Rezyklierung oder Entsorgung.

12. Vorrichtung (1) zur Durchführung eines Verfahren zur Behandlung von aus der Roheisen- und/oder Stahlherstellung mittels Sinterung von Eisenerzen und nachfolgender Roheisenherstellung im Hochofenprozeß stammenden Abgasen ; zu Zwecken der Entfernung und/oder Abscheidung der Schwefeloxide oder zu Zwecken der Reduktion des Schwefeloxidgehalts, insbesondere zur Durchführung eines Verfahrens nach einem der vorangehenden Ansprüche, wobei die Vorrichtung (1)
- eine erste Einrichtung (2) zur Durchführung eines ersten, schwefeloxidhaltige Abgase erzeugenden technischen Prozeßschrittes, nämlich eine Sintereinrichtung zur Sinterung von Eisenerzen, wobei der ersten Einrichtung (2) eine Abgasbehandlungseinrichtung I (4) zur Abgasbehandlung der in der ersten Einrichtung (2) erzeugten schwefeloxidhaltigen Abgase zugeordnet und/oder nachgeschaltet ist und wobei die Abgasbehandlungseinrichtung I (4) mindestens eine Einrichtung zum Feinverteilen und Eintragen eines festen Abgasbehandlungsreagenzes aufweist, und
- mindestens eine stromabwärts zur ersten Einrichtung (2) angeordnete zweite Einrichtung (3) zur Durchführung eines zweiten, schwefeloxidhaltige Abgase erzeugenden technischen Prozeßschrittes, nämlich eine Einrichtung zur Erzeugung von Roheisen im Hochofenprozeß, wobei der zweiten Einrichtung (3) eine Abgasbehandlungseinrichtung II (5) zur Abgasbehandlung der in der zweiten Einrichtung (3) erzeugten schwefeloxidhaltigen Abgase zugeordnet und/oder nachgeschaltet ist,
umfaßt,
wobei die Vorrichtung (1) eine Überführungseinrichtung (6) zur Überführung eines Abgasbehandlungsreagenzes von der Abgasbehandlungseinrichtung I (4) in die Abgasbehandlungseinrichtung II (5) aufweist.

13. Vorrichtung nach Anspruch 12, **dadurch gekennzeichnet,**
**daß** die Abgasbehandlungeinrichtung I (4) und/oder die Abgasbehandlungeinrichtung II (5) Mittel zum Einführen und/oder Einleiten von Sauerstoff, insbesondere Luft, aufweist, insbesondere in Form von Düsen oder Einleitungsrohren, und/oder
**daß** die Abgasbehandlungseinrichtung I (4) Mittel zur Steuerung der Temperatur der aus der Sinterung des Eisenerzes stammenden Abgase aufweist, insbesondere wobei die Temperatur der Abgase in der Abgasbehandlungseinrichtung I (4) im Bereich von 50 °C bis 1.500 °C, insbesondere 100 °C bis 1.300 °C, vorzugsweise 150 °C bis 1.000 °C, besonders bevorzugt 200 °C bis 800 °C, steuerbar ist.

14. Vorrichtung nach Anspruch 12 oder 13, **dadurch gekennzeichnet, daß** die Abgasbehandlungseinrichtung II (5) Mittel zum Inkontaktbringen eines vorzugsweise in Lösung oder Dispersion vorliegenden Abgasbehandlungsreagenzes mit dem Abgasstrom umfaßt, insbesondere wobei die Abgasbehandlungseinrichtung II (5) mindestens eine Einrichtung zum Feinverteilen, insbesondere Eindüsen und/oder Einsprühen, und Eintragen eines vorzugsweise in Lösung oder Dispersion vorliegenden Abgasbehandlungsreagenzes in den Abgasstrom, insbesondere in Form von Düsen, Einleitungsrohren oder dergleichen, oder aber eine Einrichtung zum Einleiten des Abgasstroms in einen dieser Einrichtung zugeordneten Reaktor mit einer Lösung oder Dispersion des Abgasbehandlungsreagenzes aufweist.

15. Vorrichtung nach einem der Ansprüche 12 bis 14, **dadurch gekennzeichnet,**
**daß** die Überführungseinrichtung (6) Mittel zum Überführen eines als Feststoff vorliegenden Abgasbehandlungsreagenzes in eine Lösung oder Dispersion aufweist und/oder die Überführungseinrichtung (6) Mittel zum Fördern eines Abgasbehandlungsreagenzes von der Abgasbehandlungseinrichtung I (4) in die Abgasbehandlungseinrichtung II (5) aufweist und/oder
**daß** stromabwärts zur Abgasbehandlungseinrichtung II (5) eine Gipsherstelleinrichtung zur Umsetzung des aus der Abgasbehandlungseinrichtung II (5) stammenden Abgasbehandlungsreagenzes zu Calciumsulfat, insbesondere in Form von Gips, angeordnet ist, insbesondere wobei die Gipsherstelleinrichtung getrennt und/oder dezentral betreibbar ist.

## Claims

1. A method for the treatment of exhaust gas arising from the raw iron and/or steel production by means of sintering iron ores, and from the subsequent raw iron production for the purpose of removing and/or precipitating sulfur oxides, or for the purpose of reducing a sulfur oxide content,
**characterized in that**
the exhaust gases containing sulfur oxide, which are incurred due to the raw iron and/or steel production during the process step of sintering the iron ores, and during the process step of raw iron production being carried out downstream of the same, are subjected to a separate exhaust gas treatment each by means of at least one exhaust gas reagent, wherein:
- in a process step a, the exhaust gases arising from the sintering of the raw iron ore are initially treated with excess exhaust gas reagent, wherein the stoichiometric ratio of exhaust gas reagent to sulfur oxides in a stoichiometric ratio of exhaust gas treatment reagent to sulfur oxide is in the range of 1.1:1 to 20:1, and sodium carbonate and/or sodium hydrogen carbonate is utilized as the exhaust gas treatment reagent, and wherein the exhaust gas treatment reagent is jetted and/or sprayed into the exhaust gas flow in the form of a powder in a finely dispersed manner, and
- subsequently, in a process step b, the non-converted exhaust gas reagent, resulting from the treatment of the exhaust gases arising from sintering, is utilized together with the converted exhaust gas treatment reagent for the treatment of the exhaust gases arising from the raw iron production.

2. The method according to claim 1, **characterized in that** each exhaust gas treatment is carried out in process steps a and b in the presence of oxygen.

3. The method according to claims 1 or 2, **characterized in that** with the exhaust gas treatment of the exhaust gases arising from the sintering of the iron ore, in process step a the stoichiometric ratio of exhaust gas treatment reagent, in particular of the desulfurization, to sulfur oxides is in the range of 1.2:1 to 10:1, in particular preferably 1.25:1 to 5:1.

4. The method according to one of the previous claims **characterized in that** with the exhaust gas treatment of the exhaust gases arising from the sintering of the iron ore, in process step a, the sulfur oxides, in particular sulfur dioxide, contained in the exhaust gas flow are converted to sodium sulfate by means of the exhaust gas treatment reagent, in particular the desulfurization reagent, in the presence of oxygen, in particular wherein a mixture results from the sodium sulfate and the non-converted and/or excess exhaust gas treatment reagent.

5. The method according to one of the previous claims, **characterized in that** the exhaust gas treatment of the exhaust gases arising from the sintering of the iron ore, is carried out in process step a at a temperature in the range of 50°C to 1,500°C, in particular 100°C to 1,300°C, preferably 150°C to 1,000°C, particularly preferred 200°C to 800°C.

6. The method according to one of the previous claims, **characterized in that** the exhaust gases arising from sintering, in addition to sulfur oxides contain additional acidic gases, in particular hydrogen halides, such as hydrogen chloride, in particular wherein the acidic gases, in particular hydrogen halides, such as hydrogen chloride, are equally reacted with the exhaust gas treatment reagent, in particular a desulfurization agent, in particular while forming inorganic halides, preferably sodium chloride.

7. The method according to one of the previous claims, **characterized in that** after the treatment of the exhaust gases arising from sintering any non-converted and/or excess exhaust gas treatment reagent, together with any converted exhaust gas treatment reagent, in particular the mixture of non-converted and/or excess exhaust gas treatment reagent and inorganic sulfate resulting according to process step a, is admixed with a liquid, in particular water, and/or is dispersed and/or dissolved in a liquid, in particular water, in particular, wherein the resulting mixtures and/or dispersions and/or solutions are subsequently used for the treatment of the exhaust gases arising from the raw iron production.

8. The method according to one of the previous claims, **characterized in that** with the treatment of the exhaust gases arising from raw iron production in process step b the exhaust gas treatment reagent not converted and/or in excess in process step a is brought into contact with the exhaust gases arising from raw iron production in the presence of the exhaust gas treatment reagent converted in process step a, in particular in the form of preferably an aqueous dispersion and/or solution, in particular wherein the exhaust gas treatment reagent, which was not converted and/or was present in excess in process step a, is converted to sodium sulfate in the presence of oxygen.

9. The method according to one of the previous claims, **characterized in that** subsequent to process step b, any heavy metals and/or airborne dust are removed and/or separated from the exhaust gas treatment reagent, in particular separated by means of flotation and/or filtration and/or sedimentation.

10. The method according to one of the previous claims, **characterized in that** subsequent to process step b the converted exhaust gas treatment reagent in the form of sodium sulfate is further converted to, preferably, calcium sulfate, in particular in the form of gypsum.

11. The method according to one of the previous claims, **characterized in that** the converted exhaust gas treatment reagent, and possibly additional exhaust gas treatment products are collected and/or accumulated across all exhaust gas treatment steps, in particular across process steps a and b, in particular without any interconnected processing and/or separating steps, in particular, wherein not until the last exhaust gas treatment step, in particular after process step b, the exhaust gas treatment products accumulated and/or collected and converted across all exhaust gas treatment steps are mutually processed, in particular are separated and subsequently delivered to their intended uses, in particular for further processing, recycling, or disposal.

12. A device (1) for carrying out a method for the treatment of exhaust gases arising from raw iron and/or steel production by means of sintering iron ore, and subsequent raw iron production in a blast furnace process, for the purpose of removing and/or precipitating sulfur oxide, or for the purpose of reducing the sulfur oxide content, in particular for carrying out a method according to one of the previous claims, the device (1) comprising:
- a first unit (2) for carrying out a first technical process step producing exhaust gases containing sulfur oxide, that is to say a sintering unit for sintering iron ores, wherein an exhaust gas treatment unit I (4) for the exhaust gas treatment of the exhaust gases containing sulfur oxide produced in the first unit (2) is assigned to and/or connected downstream of the first unit (2), and wherein the exhaust gas treatment unit I (4) has at least one unit for the fine dispersing and incorporating a solid exhaust gas treatment reagent, and
- at least one second unit (3) being disposed downstream of the first unit (2) for carrying out a second technical process step producing exhaust gases containing sulfur oxide, that is to say a unit for producing raw iron in a blast furnace process, wherein an exhaust gas treatment unit II (5) is assigned to and/or connected downstream of the second unit (3) for the exhaust gas treatment of the exhaust gases containing sulfur oxide, which are produced in the second unit (3),
wherein the device (1) has a transfer unit (6) for transferring an exhaust gas reagent of the exhaust gas treatment unit I (4) into the exhaust gas treatment unit II (5).

13. The device according to claim 12, **characterized in that**
the exhaust gas treatment unit I (4) and/or the exhaust gas treatment unit II (5) each have means for inserting and/or discharging oxygen, in particular air, in particular in the form of nozzles or discharge pipes, and/or
the exhaust gas treatment unit I (4) has means for controlling the temperature of the exhaust gases arising from sintering the iron ore, in particular, wherein the temperature of the exhaust gases in the exhaust gas treatment unit I (4) may be controlled to within a range of 50°C to 1,500°C, in particular 100°C to 1,300°C, preferably 150°C to 1,000°C, particularly preferred 200°C to 800°C.

14. The device according to claims 12 or 13, **characterized in that** the exhaust gas treatment unit II (5) comprises means for bringing an exhaust gas treatment reagent, preferably being present in solution or dispersion, into contact with the exhaust gas flow, in particular, wherein the exhaust gas treatment unit II (5) has at least one unit for finely dispersing, in particular jetting in, and/or spraying in, and inserting an exhaust gas treatment reagent, preferably being present in solution or dispersion, into the exhaust gas flow, in particular in the form of nozzles, insertion pipes, or the like, or also a unit for inserting the exhaust gas flow into a reactor being assigned to this unit, together with a solution or dispersion of the exhaust gas treatment reagent.

15. The device according to one of the claims 12 to 14, **characterized in that**
the transfer unit (6) has means for transferring an exhaust gas treatment reagent being present as a solid matter into the solution or dispersion, and/or the transfer unit (6) has means for carrying the exhaust gas treatment reagent from the exhaust gas treatment unit I (4) to the exhaust gas treatment unit II (5), and/or
a gypsum production unit is disposed downstream of the exhaust gas treatment unit II (5) for the conversion of the exhaust gas treatment reagent arising from the exhaust gas treatment unit II (5) into calcium sulfate, in particular in the form of gypsum, in particular, wherein the gypsum production unit may be operated separately, and/or locally.

## Revendications

1. Procédé de traitement de gaz de fumée provenant de la production de fer brut et/ou d'acier par frittage de minerais de fer suivi de la préparation de fer brut dans un processus de haut fourneau, en vue de l'élimination et/ou de la séparation des oxydes de soufre ou en vue de la réduction de la teneur en oxydes de soufre,
**caractérisé en ce que**
les gaz de fumée contenant des oxydes de soufre dégagés respectivement, dans le cadre de la production du fer brut et/ou de l'acier, dans l'étape de procédé du frittage des minerais de fer et dans l'étape de procédé, exécutée en aval, de la préparation du fer brut, sont soumis à un traitement respectivement séparé au moyen d'un réactif de traitement des gaz de fumée, lors duquel:
- dans une étape de procédé a, les gaz de fumée provenant du frittage du minerai de fer brut sont d'abord traités par un excès de réactif de traitement des gaz de fumée, le rapport stoechiométrique du réactif de traitement des gaz de fumée aux oxydes de soufre se trouvant dans un rapport stoechiométrique du réactif de traitement des gaz de fumée aux oxydes de soufre dans l'intervalle de 1,1 : 1 à 20 : 1, et du carbonate de sodium et/ou de l'hydrogénocarbonate de sodium étant utilisés comme réactif de traitement des gaz de fumée, et le réactif de traitement des gaz de fumée étant giclé et/ou pulvérisé dans le courant de gaz de fumée sous la forme d'une poudre finement divisée, et
- dans une étape de procédé suivante b, le réactif de traitement des gaz de fumée résultant, n'ayant pas réagi après le traitement des gaz de fumée provenant du frittage, est utilisé ensemble avec le réactif de traitement des gaz de fumée ayant réagi pour le traitement des gaz de fumée provenant de la production du fer brut.

2. Procédé selon la revendication 1, **caractérisé en ce que** le traitement des gaz de fumée dans les étapes de procédé a et b est effectué respectivement en présence d'oxygène.

3. Procédé selon la revendication 1 ou 2, **caractérisé en ce que** lors du traitement des gaz de fumée provenant du frittage du minerai de fer dans l'étape de procédé a, le rapport stcechiométrique du réactif de traitement des gaz de fumée, en particulier du réactif d'élimination du soufre, aux oxydes de soufre, se trouve dans un intervalle de 1,2 : 1 à 10 : 1, de façon particulièrement préférée de 1,25 : 1 à 5 : 1.

4. Procédé selon l'une quelconque des revendications précédentes, **caractérisé en ce que** lors du traitement des gaz de fumée provenant du frittage du minerai de fer dans l'étape de procédé a, les oxydes de soufre contenus dans le courant de gaz de fumée, en particulier le dioxyde de soufre, sont convertis en présence d'oxygène avec le réactif de traitement des gaz de fumée, en particulier le réactif d'élimination du soufre, en sulfate de sodium, en particulier moyennant quoi il résulte un mélange de sulfate de sodium et de réactif de traitement des gaz de fumée n'ayant pas réagi ou étant en excès.

5. Procédé selon l'une quelconque des revendications précédentes, **caractérisé en ce que** le traitement des gaz de fumée provenant du frittage du minerai de fer dans l'étape de procédé a est exécuté à une température dans l'intervalle de 50 °C à 1500 °C, en particulier de 100 °C à 1300 °C, de préférence de 150 °C à 1000 °C, de façon particulièrement préférée de 200 °C à 800 °C.

6. Procédé selon l'une quelconque des revendications précédentes, **caractérisé en ce que** les gaz de fumée provenant du frittage contiennent, outre des oxydes de soufre, d'autres gaz acides, en particulier des halogénures d'hydrogène comme du chlorure d'hydrogène, moyennant quoi lesdits gaz acides, en particulier les halogénures d'hydrogène, sont également mis en réaction avec le réactif de traitement des gaz de fumée, en particulier le réactif d'élimination du soufre, en particulier moyennant la formation d'halogénures inorganiques, de préférence du chlorure de sodium.

7. Procédé selon l'une quelconque des revendications précédentes, **caractérisé en ce que** le réactif de traitement des gaz de fumée résultant après le traitement des gaz de fumée provenant du frittage selon l'étape de procédé a, n'ayant pas réagi et/ou étant en excès, ensemble avec du réactif de traitement des gaz de fumée ayant réagi, en particulier le mélange du réactif de traitement des gaz de fumée n'ayant pas réagi et/ou étant en excès et du sulfate inorganique, est additionné d'un liquide, en particulier de l'eau et/ou est dispersé et/ou dissous dans un liquide, en particulier de l'eau, moyennant quoi en particulier les mélanges et/ou les dispersions et/ou les solutions résultants sont ensuite utilisés pour le traitement des gaz de fumée provenant de la production du fer brut.

8. Procédé selon l'une quelconque des revendications précédentes, **caractérisé en ce que** lors du traitement des gaz de fumée provenant de la préparation du fer brut dans l'étape de procédé b, le réactif de traitement des gaz de fumée n'ayant pas réagi ou étant en excès dans l'étape de procédé a, en présence du réactif de traitement des gaz de fumée ayant déjà réagi dans l'étape de procédé a, est amené en contact avec les gaz de fumée provenant de la préparation du fer brut, en particulier sous la forme d'une dispersion et/ou d'une solution aqueuse, moyennant quoi en particulier le réactif de traitement des gaz de fumée n'ayant pas réagi ou étant en excès dans l'étape de procédé a est converti en présence d'oxygène en sulfate de sodium.

9. Procédé selon l'une quelconque des revendications précédentes, **caractérisé en ce qu'**à la suite de l'étape de procédé b, le réactif de traitement des gaz de fumée ayant réagi est débarrassé des métaux lourds et/ou des poussières volantes et/ou est séparé, en particulier est séparé par flottation et/ou par filtration et/ou par sédimentation.

10. Procédé selon l'une quelconque des revendications précédentes, **caractérisé en ce qu'**à la suite de l'étape de procédé b, le réactif de traitement des gaz de fumée ayant réagi, sous la forme de sulfate de sodium, continue d'être converti, de préférence en sulfate de calcium, en particulier sous forme de gypse.

11. Procédé selon l'une quelconque des revendications précédentes, **caractérisé en ce que** le réactif de traitement des gaz de fumée ayant réagi et, le cas échéant, d'autres produits du traitement des gaz de fumée, sont collectés et/ou sont accumulés au cours de toutes les étapes du traitement des gaz de fumée, en particulier au cours des étapes de procédé a et b, en particulier sans des étapes d'élaboration et/ou de séparation intercalées, en particulier **en ce que** seulement après la dernière étape de traitement des gaz de fumée, en particulier après l'étape de procédé b, les produits du traitement des gaz de fumée accumulés et/ou collectés au cours de toutes les étapes de traitement des gaz de fumée sont élaborés ensemble, en particulier sont séparés, puis sont acheminés à leur utilisation conforme, en particulier le traitement ultérieur, le recyclage ou l'élimination.

12. Dispositif (1) pour l'exécution d'un procédé pour le traitement des gaz de fumée provenant de la préparation du fer brut et/ou de l'acier par frittage de minerais de fer, suivi de la production du fer brut dans un processus de haut fourneau, en vue de l'élimination et/ou de la séparation des oxydes de soufre ou en vue de la réduction de la teneur en oxydes de soufre, en particulier pour l'exécution d'un procédé selon l'une quelconque des revendications précédentes, le dispositif (1) comprenant:
- un premier dispositif (2) pour l'exécution d'une première étape technique de procédé produisant des gaz de fumée contenant des oxydes de soufre, en l'occurrence un dispositif de frittage pour le frittage de minerais de fer, sachant qu'au premier dispositif (2) est affecté - et/ou est installé en aval de celui-ci - un dispositif de traitement des gaz de fumée I (4) pour le traitement des gaz de fumée contenant des oxydes de soufre produits dans ledit premier dispositif (2) et sachant que le dispositif de traitement des gaz de fumée I (4) comporte au moins un dispositif pour distribuer finement et pour introduire un réactif solide de traitement des gaz de fumée, et
- au moins un deuxième dispositif (3) disposé en aval du premier dispositif (2) pour l'exécution d'une deuxième étape de procédé produisant des gaz de fumée contenant des oxydes de soufre, en l'occurrence un dispositif pour la production de fer brut dans un processus de haut fourneau, sachant qu'un dispositif de traitement des gaz de fumée II (5), pour le traitement des gaz de fumée contenant des oxydes de soufre produits dans le deuxième dispositif (3), est affecté au deuxième dispositif (3) et/ou est monté en aval de celui-ci,
sachant que le dispositif (1) comporte un dispositif de transfert (6) pour transférer un réactif de traitement des gaz de fumée du dispositif de traitement des gaz de fumée I (4) au dispositif de traitement des gaz de fumée II (5).

13. Dispositif selon la revendication 12, **caractérisé en ce que** le dispositif de traitement des gaz de fumée I (4) et/ou le dispositif de traitement des gaz de fumée II (5) comportent des moyens pour introduire et/ou injecter de l'oxygène, en particulier de l'air, en particulier sous la forme de buses ou de tuyaux d'introduction, et/ou
**en ce que** le dispositif de traitement des gaz de fumée I (4) comporte des moyens pour la commande de la température des gaz de fumée provenant du frittage du minerai de fer, la température des gaz de fumée dans le dispositif de traitement des gaz de fumée I (4) pouvant être commandée en particulier dans l'intervalle de 50 °C à 1500 °C, en particulier de 100 °C à 1300 °C, de préférence de 150 °C à 1000 °C, de façon particulièrement préférée de 200 °C à 800 °C.

14. Dispositif selon la revendication 12 ou 13, **caractérisé en ce que** le dispositif de traitement des gaz de fumée II (5) comporte des moyens de mise en contact d'un réactif de traitement des gaz de fumée, présent de préférence en solution ou en dispersion, avec le courant de gaz de fumée, en particulier **en ce que** le dispositif de traitement des gaz de fumée II (5) comporte au moins un dispositif pour une distribution fine, en particulier un giclage et/ou une pulvérisation, pour l'introduction dans le courant de gaz d'un réactif de traitement des gaz de fumée présent de préférence en solution ou en dispersion, en particulier sous la forme de buses, de tuyaux d'introduction ou similaires, ou encore un dispositif pour l'introduction du courant de gaz de fumée dans un réacteur affecté à ce dispositif avec une solution ou une dispersion du réactif de traitement des gaz de fumée.

15. Dispositif selon l'une quelconque des revendications 12 à 14, **caractérisé en ce que**
le dispositif de transfert (6) comporte des moyens pour le transfert d'un réactif de traitement des gaz de fumée, présent comme solide, dans une solution ou une dispersion, et/ou **en ce que** le dispositif de transfert (6) comporte des moyens pour le transport d'un réactif de traitement des gaz de fumée du dispositif de traitement des gaz de fumée I (4) dans le dispositif de traitement des gaz de fumée II (5), et/ou
**en ce qu'**en aval du dispositif de traitement des gaz de fumée II (5) est disposé un dispositif de production de gypse pour la conversion du réactif de traitement des gaz de fumée, en provenance du dispositif de traitement des gaz de fumée II (5), en sulfate de calcium, en particulier sous forme de gypse, le dispositif de production de gypse pouvant être exploité en particulier séparément et/ou de façon décentralisée.
